# EUROPÄISCHE PATENTSCHRIFT

(11) **EP 3 045 904 B1**
(45) Veröffentlichungstag und Bekanntmachung des Hinweises auf die Patenterteilung: **07.02.2018**
(21) Anmeldenummer: 15200048.5
(22) Anmeldetag: 15.12.2015
(51) Int. Cl.: G01N 27/76

(54) **VERFAHREN ZUM BETRIEB EINER MAGNETOMECHANISCHE SENSORVORRICHTUNG ZUR PARAMAGNETISCHEN GASANALYSE MIT MESSUNG VON STÖREINFLÜSSEN**
METHOD FOR OPERATING A MAGNETOMECHANICAL SENSOR DEVICE FOR PARAMAGNETIC GAS ANALYSIS WITH MEASUREMENT OF INTERFERENCE
PROCÉDÉ DE FONCTIONNEMENT D'UN DISPOSITIF DE CAPTEUR MAGNÉTO-MÉCANIQUE DESTINÉ À L'ANALYSE DE GAZ PARAMAGNÉTIQUES AVEC MESURE DES INFLUENCES PARASITES

(30) Priorität: 22.12.2014 DE 102014019366
(43) Veröffentlichungstag der Anmeldung: 20.07.2016
(60) Teilanmeldung: 17210275.8
(73) Patentinhaber: ABB Schweiz AG, 5400 Baden (CH)
(72) Erfinder: BAUER, Thomas, 61350 Bad Homburg (DE); MÜLLER, Eginhard, 65719 Hofheim (DE)
(74) Vertreter: Marks, Frank

(56) Entgegenhaltungen:
- DE-A1-102007 028 146
- GB-A- 1 220 413
- US-A- 3 612 990
- US-A- 3 612 991
- US-A- 4 807 463
- US-A1- 2012 035 882
- US-B1- 6 246 227

## Beschreibung

Die vorliegende Erfindung betrifft eine magnetomechanische Sensorvorrichtung zur paramagnetischen Gasanalyse, umfassend einen Probekörper zur drehbaren Aufhängung in einem inhomogenen Magnetfeld, eine am Probekörper befestigte Leiterschleife, um bei deren Bestromung durch elektromagnetische Wechselwirkung mit dem inhomogenen Magnetfeld ein Drehmoment zur mechanischen Stabilisierung des Probekörpers zu erzeugen, eine elektrisch leitende Aufhängevorrichtung, zur drehbaren Lagerung des Probekörpers und zur Bestromung der in Reihe dazu geschalteten Leiterschleife über elektrische Kontaktstellen. Die Erfindung betrifft ferner ein diesbezügliches Verfahren.

Das Einsatzgebiet der Erfindung erstreckt sich auf die paramagnetische Gasanalyse, insbesondere der Sauerstoffmessung. Bei dieser Art der Messung wird von der unter den Gasen seltenen Eigenschaft des Sauerstoffs Gebrauch gemacht, dass dieser eine hohe paramagnetische Suszeptibilität besitzt. Liegt in einem Gasgemisch ein inhomogenes magnetisches Feld an, so werden die Sauerstoffmoleküle sich entlang steigender Feldgradienten bewegen und sich dadurch in den Bereichen hoher Feldstärke sammeln. Um dieses Verhalten des Sauerstoffs sichtbar zu machen, wird ein Probekörper verwendet, der drehbar in einem Gas aufgehängt ist, in dem sich ein geeignetes inhomogenes Magnetfeld befindet. Durch die lokale Verdichtung der paramagnetischen Sauerstoffmoleküle wird ein Drehmoment auf den Probekörper ausgeübt, der sich infolgedessen um die durch einen Spanndraht definierte Achse, vorzugsweise durch den Schwerpunkt des Probekörpers, dreht. Zur genauen Messung dieser Bewegung wird ein Spiegel als Teil einer Lichtwaage verwendet, die die Abweichung eines Lichtreflexes von diesem Spiegel auf einem Fotosensor misst. Zur Kompensation der Bewegung des Probekörpers, also zu dessen Stabilisierung, wird ein Strom durch die Leiterschleife geleitet, welcher mit dem Magnetfeld wechselwirkt und den Probekörper wieder in seine Ruhelage zurückführt. Die Stärke dieses Stroms ist dann ein Maß für die Sauerstoffkonzentration.

Aus der DE 10 2007 028 146 A1 geht eine Sauerstoffmesszelle hervor, welche eine Einrichtung zur Messung der Temperatur eines Gases in einer Messkammer vorsieht. Die kontinuierliche Überwachung der Temperatur dient dabei der Verbesserung der Messgenauigkeit. Nachteilhaft an dieser Lösung ist allerdings, dass ein zusätzlicher Temperatursensor, also auch zusätzlicher Konstruktions- und Wartungsaufwand, vonnöten ist.

Aus der DE 10 2007 028 148 A1 geht eine Sauerstoffmesszelle hervor, welche über eine Einrichtung zur Messung des Gasdurchflusses in der Messkammer verfügt. Durch die zusätzliche Messung des Gasflusses soll ebenfalls die Messgenauigkeit erhöht werden.

Aus der EP 2 006 674 A1 geht eine Sauerstoffmesszelle hervor, welche über wenigstens eine Einrichtung zur Messung des Gasdrucks in der Messkammer verfügt. Nachteilhaft an den zuvor genannten, aus dem allgemein bekannten Stand der Technik hervorgehenden, technischen Lösungen ist, dass zur Überprüfung jeweils eines physikalischen Parameters eine eigene Diagnostik in die Messkammer eingesetzt werden muss. Außerdem ist keine Messvorrichtung oder Methode bekannt, um Schäden zu diagnostizieren, die durch Verschleiß verursacht werden. Entstehen kann ein solcher Verschleiß beispielsweise durch Korrosion, ggf. durch das jeweilige Gas bedingt, oder durch Beeinträchtigung der Leitfähigkeit eines elektrischen Kontaktes, beispielsweise zwischen Spanndraht und Leiterspule.

In der US 2012/035882 A1 ist eine Vorrichtung zur Kompensation von Ballancefehlern eines Probenkörpers in einer Gasmesszelle eines paramagnetischen Gassensors beschrieben. Der Probenkörper umfasst eine Leiterschleife und ist mit einer elektrisch leitenden Aufhängung in einem inhomogenen Magnetfeld angeordnet. Darüber hinaus umfasst die Vorrichtung eine Messvorrichtung zur Erfassung eines elektrischen Strommesswerts oder eines anderen Messwerts, welcher für den elektrischen Strom repräsentativ ist.

Aus der US 4,807,463 A ist ein paramagnetischer Gassensor mit einem Probenkörper bestehend aus zwei Hohlkörpern, welche über eine Verbindungsstück miteinander verbunden sind, bekannt, wobei der Probenkörper in einer Leiterschleife mit einer elektrisch leitenden Aufhängung in einem inhomogenen Magnetfeld angeordnet ist. Zur Bestimmung des auf den Probenkörper wirkenden Drehmoments wird der Strom durch die Leiterschleife oder die Spannung über der Leiterschleife gemessen.

In der GB 1220413 A ist ein Verfahren zum Betrieb einer magnetomechanischen Sensorvorrichtung beschrieben, bei dem die Position des Probenkörpers über die Größe des Wechselstroms bestimmt wird.

Schliesslich ist aus der US 6,246,227 B1 ein Verfahren zur Bestimmung der Position eines Probenkörpers mittels eines Wechselstromsignals bekannt.

Es ist die Aufgabe der vorliegenden Erfindung, ein Verfahren zu schaffen, um mit möglichst geringem Aufwand zusätzliche, für die Messgenauigkeit relevante Aussagen über den Zustand der Sensorvorrichtung machen zu können.

Die Aufgabe wird ausgehend von einer magnetomechanischen Sensorvorrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Messvorrichtung zur Messung des elektrischen Widerstandes des durch Aufhängevorrichtung, Kontaktstellen und Leiterschleife gebildeten Strompfades vorgesehen ist.

Der Vorteil einer solchen Vorrichtung kann unter anderem darin gesehen werden, dass durch die Messung beispielsweise des ohmschen Widerstandes, also des Gleichstromwiderstandes, oder beispielsweise der Impedanz, also des Wechselstromwiderstandes, verschiedene Aussagen beispielsweise über den Verschleißzustand der Messvorrichtung gemacht werden können. Außerdem beruht die Funktionsweise eines gattungsgemäßen Sensors üblicherweise darauf, dass der elektrische Strom durch die Leiterspule gemessen wird, was eine Messung des elektrischen Widerstandes vereinfachen kann, da der Strom gegebenenfalls bereits bekannt ist, beziehungsweise da bereits ein Strommessgerät vorgesehen sein kann.

Eine bevorzugte Ausführungsform der Erfindung sieht vor, dass die Messvorrichtung ein Strommessgerät und ein Spannungsmessgerät umfasst.

Vorteilhaft hierbei ist insbesondere, dass ein Strommessgerät typischerweise bereits in die Sensorvorrichtung integriert ist und dass ein Spannungsmessgerät beispielsweise durch Kontaktierung an den Spanndrähten oder an anderen, vorzugsweise unbeweglichen Stellen entlang des die Leiterschleife einschließenden Strompfades konstruktiv sehr einfach in die Messvorrichtung integriert werden kann.

Besonders bevorzugt ist dabei eine Anordnung, bei welcher das Spannungsmessgerät parallel zur Aufhängevorrichtung geschaltet ist und wobei das Strommessgerät in Reihe mit der Aufhängevorrichtung und dem dazu parallel geschalteten Spannungsmessgerät geschaltet ist.

Der Vorteil dieser Anordnung ist unter anderem darin zu sehen, dass somit spannungsrichtig gemessen wird. Dies bedeutet, dass das Spannungsmessgerät idealerweise die exakte Spannung zwischen den beiden Kontaktpunkten liefert, zwischen denen die Leiterspule angeordnet ist, während das Strommessgerät einen nur marginal, in der Praxis vernachlässigbar verfälschten Messwert für den Strom liefert. Die Verfälschung entsteht, da der durch das Strommessgerät gemessene Strom sich auf Leiterspule und Spannungsmessgerät aufteilt. Der elektrische Widerstand der Leiterspule und des zusammenhängenden Strompfades ist allerdings typischerweise extrem gering, gleichzeitig ist der elektrische Widerstand des Spannungsmessgerätes extrem hoch, typischerweise im 10 MΩ-Bereich.

Außerdem besteht der Vorteil darin, dass die Spannung vorzugsweise an zwei unbeweglichen Stellen abgegriffen wird, da die Aufhängevorrichtung neben dem tordierbaren oder drehbaren Spanndraht auch einen unbeweglichen Teil umfasst. Die Spannung beispielsweise direkt an der Leiterspule abzugreifen ist zwar technisch denkbar, aber aufwendiger.

Gemäß einer besonders bevorzugten Ausführungsform der Erfindung umfasst die Aufhängevorrichtung zwei mit der Drehachse des Probekörpers koaxiale, axial beabstandete Spanndrähte.

Die Spanndrähte selbst können beispielsweise mit einer weiteren Aufhängevorrichtung, wie beispielsweise mit jeweils einem Lötauge, verbunden sein. Eine solche Aufhängevorrichtung ist besonders einfach herzustellen und gewährleistet gleichzeitig die gewünschte, um genau eine Drehachse drehbare Lagerung des Probekörpers sowie eine Stromversorgung für die Leiterspule.

Bevorzugterweise ist am Probekörper ein Spiegel angebracht, zur Messung der Auslenkung des Probekörpers mit einer optischen Waage.

Der Vorteil hierbei ist eine besonders empfindliche Messung für bereits geringe Auslenkungen aus der stabilen Ruhelage des Probekörpers.

Ein mit der erfindungsgemäßen Messvorrichtung im Zusammenhang stehendes Verfahren sieht vor, dass durch die Messvorrichtung ein elektrischer Widerstand zwischen zwei Punkten der Aufhängevorrichtung bestimmt wird.

Durch eine solche Messung können verschiedene zusätzliche Aussagen über den Zustand beispielsweise der Leiterspule oder der elektrischen Kontakte gemacht werden.

Eine bevorzugte Ausführungsform dieses Verfahrens sieht vor, dass der Gleichstromwiderstand, also der ohmsche Widerstand, zwischen zwei Punkten der Aufhängevorrichtung bestimmt wird und zur Detektion von Korrosion der Aufhängevorrichtung, der Kontaktstellen oder der Leiterschleife ausgewertet wird.

Der Vorteil dieses Verfahrens ist darin zu sehen, dass somit eine sehr einfache Diagnostik geschaffen wird, den Zustand beziehungsweise den Fortschritt von Korrosion zu quantifizieren, da durch Korrosion die elektrische Leitfähigkeit von insbesondere aufgedampften Leiterbahnen langsam aber kontinuierlich abnimmt und da sich dadurch der Gleichstromwiderstand kontinuierlich erhöht.

Eine weitere bevorzugte Ausführungsform des Verfahrens sieht vor, dass der Gleichstromwiderstand bestimmt wird und zur Detektion von Unbeständigkeit von elektrischen Kontaktstellen ausgewertet wird.

Insbesondere sind damit die Kontaktstellen zwischen den Spanndrähten und der Leiterschleife gemeint. Kommt es beispielsweise durch mechanische Belastung oder durch unsaubere Lötstellen oder durch andere Fehler bei anderen Verbindungsmethoden, wie bonding, zu Veränderungen bei diesen Kontaktierungen, so sind diese Veränderungen als, möglicherweise sprunghafte, Erhöhungen des Gleichstromwiderstandes messbar.

Eine zusätzliche, besonders bevorzugte Ausführungsform des Verfahrens besteht darin, dass der Gleichstromwiderstand bestimmt wird und zur Bestimmung der Temperatur der Aufhängevorrichtung, der Kontaktstellen und/oder der Leiterschleife ausgewertet wird.

Diese Ausführungsform ist besonders vorteilhaft, da somit eine Temperaturmessung ermöglicht wird, ohne einen gesonderten Temperatursensor in die Sensorvorrichtung einfügen zu müssen. Dabei wird ausgenutzt, dass sich der Gleichstromwiderstand eines elektrischen Leiters häufig proportional zur Temperatur verhält, wobei üblicherweise eine Erhöhung der Temperatur eine Erhöhung des Widerstandes bewirkt. Materialabhängige Temperaturkoeffizienten insbesondere der Leiterspule können dabei vorteilhafterweise berücksichtigt werden.

Ein weiteres bevorzugtes Verfahren besteht darin, dass der Wechselstromwiderstand, also die Impedanz, bestimmt wird und zur Bestimmung der Position des Probekörpers im inhomogenen Magnetfeld ausgewertet wird.

Hierbei wird ausgenutzt, dass sich der Wechselstromwiderstand insbesondere der Leiterspule durch Induktion, vermittelt durch das Magnetfeld, positionsabhängig verändert. Der Vorteil besteht dann in einer zusätzlichen, gegebenenfalls sehr genauen Diagnostik bezüglich der Position des Probekörpers. Zur Bestimmung des Wechselstromwiderstandes kann beispielsweise ein Wechselstrom zusätzlich auf einen Gleichstrom auferlegt werden oder es kann ein Wechselstrom ohne Gleichstromanteil für dieses Messverfahren verwendet werden.

Ein weiterer Vorteil der Verwendung eines Wechselstroms besteht darin, dass dabei sowohl der Gleichstromwiderstand (ohmscher Widerstand) als auch der Wechselstromwiderstand (Impedanz) bestimmt werden kann.

Weitere die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1: den schematischen Aufbau einer erfindungsgemäßen Sensorvorrichtung, und
- Figur 2: die Rückseite des Probekörpers dieses Aufbaus.

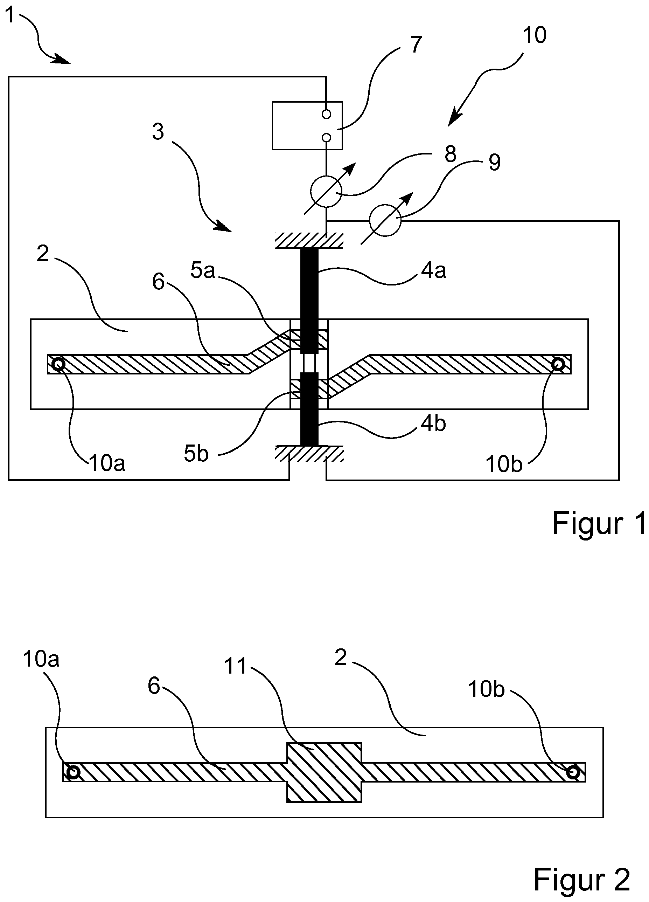

Gemäß Figur 1 umfasst eine magnetomechanische Sensorvorrichtung **1** zur paramagnetischen Gasanalyse einen Probekörper **2,** welcher in einem hier nicht dargestellten inhomogenen Magnetfeld aufgehängt ist. Der Probekörper **2** ist dabei mithilfe einer Aufhängevorrichtung **3** aufgehängt, welche zwei Spanndrähte **4a**, **4b** umfasst, welche koaxial zur Symmetrie- und Drehachse des Probekörpers **2** angeordnet sind. Die beiden Spanndrähte **4a**, **4b** sind ferner axial beabstandet, so dass ein elektrischer Stromfluss über diese Spanndrähte durch elektrischen Kontakt an den Kontaktstellen **5a**, **5b** mit einer hier nur teilweise dargestellten Leiterschleife **6** ermöglicht wird. Die Leiterschleife **6** wird dabei auf der Rückseite des Probekörpers **2** geschlossen.

Wird nun durch einen Spannungsgenerator **7** eine Spannung an der Aufhängevorrichtung **3** angelegt, so fließt ein Strom durch die Aufhängevorrichtung **3**, die Spanndrähte **4a**, **4b**, die Kontaktstellen **5a**, **5b** und die Leiterschleife **6**. Dieser elektrische Strom wechselwirkt mit dem hier nicht dargestellten inhomogenen Magnetfeld und bewirkt somit eine Rotation um die durch die Spanndrähte **4a**, **4b** definierte Drehachse. Ein in Reihe mit dem Spannungsgenerator **7** geschaltetes Strommessgerät **8** misst dabei die von dem Spannungsgenerator **7** ausgehende Stromstärke, während ein Spannungsmessgerät **9** die Spannung an der Aufhängevorrichtung **3** abgreift. Das Strommessgerät **8** ist dabei zu dem Spannungsmessgerät **9** und der parallel geschalteten Aufhängevorrichtung **3** in Reihe geschaltet. Das Spannungsmessgerät **9** misst dann die Spannung, die über die Aufhängevorrichtung **3** und die Spanndrähte **4a**, **4b** und die Kontaktstellen **5a**, **5b** und die Leiterschleife **6** abfällt.

Durch gleichzeitige Kenntnis der Stromstärke und der Spannung können der Gleichstromwiderstand (der ohmsche Widerstand) und der Wechselstromwiderstand (die Impedanz) dieser elektrischen Komponenten bestimmt werden.

Im Betrieb kann dann über Berechnung des Gleichstromwiderstandes beispielsweise eine Unbeständigkeit der elektrischen Kontaktstellen **5a**, **5b** detektiert und ausgewertet werden.

Auch kann über Messung des Gleichstromwiderstandes eine Korrosion der Aufhängevorrichtung **3** inklusive der Spanndrähte **4a**, **4b**, und / oder der Kontaktstellen **5a**, **5b** und/oder der Leiterschleife **6** festgestellt werden, welche sich in einem steigenden ohmschen Widerstand zeigt.

Auch kann im Betrieb durch die Auswertung des Gleichstromwiderstandes die Temperatur von Aufhängevorrichtung **3** inklusive der Spanndrähte **4a**, **4b**, der Kontaktstellen **5a**, **5b** und/oder der Leiterschleife **6** berechnet werden.

Insbesondere wenn durch den Spannungsgenerator **7** eine Wechselspannung generiert wird, kann im Betrieb durch Bestimmung des Wechselstromwiderstandes, also der Impedanz, aufgrund der Wechselwirkung des inhomogenen Magnetfeldes mit der Leiterspule **6** die Position des Probekörpers **2** im Magnetfeld bestimmt werden.

Figur 2 zeigt die Rückseite des Probekörpers **2**. Die Leiterschleife **6** wird über Durchkontaktierungen **10a**, **10b** geschlossen und bildet mittig ferner einen Spiegel **11**, welcher mit einer hier nicht weiter dargestellten optischen Waage zusammenwirkt. Ein Lichtstrahl trifft dabei auf den Spiegel **11** und wird auf einen vorzugsweise räumlich auflösenden Lichtsensor reflektiert. Sobald sich der Probekörper **2** um die durch die Spanndrähte **4a**, **4b** definierte Achse dreht, wird dies durch den Lichtsensor detektiert. Durch Erhöhung oder Verringerung des Stromes durch die Leiterspule **6** und Wechselwirkung mit dem Magnetfeld wird der Probekörper **2** dann wieder stabilisiert, so dass der Lichtstrahl wieder auf die ursprüngliche Stelle auf dem Lichtsensor reflektiert wird.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass der Probekörper nicht über zylindrische Drähte, sondern über federnde Elemente beliebiger anderer Form gelagert wird. Auch ist möglich, dass der Probekörper nicht aus einem massiven Festkörper besteht, sondern beispielsweise aus mit Stickstoff gefüllten Hohlkörpern.

### Bezugszeichenliste

- 1: Sensorvorrichtung
- 2: Probekörper
- 3: Aufhängevorrichtung
- 4a, 4b: Spanndraht
- 5a, 5b: Kontaktstelle
- 6: Leiterschleife
- 7: Spannungsgenerator
- 8: Strommessgerät
- 9: Spannungsmessgerät
- 10a, 10b: Durchkontaktierung
- 11: Spiegel
- 12: Messvorrichtung

## Patentansprüche

1. Verfahren zum Betrieb einer magnetomechanischen Sensorvorrichtung (1) zur paramagnetischen Gasanalyse, umfassend
- einen Probekörper (2) zur drehbaren Aufhängung in einem inhomogenen Magnetfeld,
- eine am Probekörper (2) befestigte Leiterschleife (6), um bei deren Bestromung durch elektromagnetische Wechselwirkung mit dem inhomogenen Magnetfeld ein Drehmoment zur mechanischen Stabilisierung des Probekörpers (2) zu erzeugen,
- eine elektrisch leitende Aufhängevorrichtung (3), zur drehbaren Lagerung des Probekörpers (2) und zur Bestromung der in Reihe dazu geschalteten Leiterschleife (6) über elektrische Kontaktstellen (5a, 5b), wobei mit einer Messvorrichtung (12) ein elektrischer Gleichstromwiderstand zwischen zwei Punkten der Aufhängevorrichtung (3) bestimmt wird und dieser Gleichstromwiderstand zur Bestimmung der Temperatur der Aufhängevorrichtung (3), der Kontaktstellen (5a, 5b) und / oder der Leiterschleife (6) ausgewertet wird..

2. Verfahren nach Anspruch 1, wobei der Gleichstromwiderstand bestimmt wird und zur Detektion von Unbeständigkeit der elektrischen Kontaktstellen (5a, 5b) ausgewertet wird.

3. Verfahren nach Anspruch 1, wobei der Gleichstromwiderstand bestimmt wird und zur Detektion von der Korrosion der Aufhängevorrichtung (3), der Kontaktstellen (5a, 5b) und / oder der Leiterschleife (6) ausgewertet wird.

## Claims

1. Method for operating a magnetomechanical sensor apparatus (1) for paramagnetic gas analysis, comprising
- a test specimen (2) for being rotatably suspended in an inhomogeneous magnetic field,
- a conductor loop (6) which is fastened to the test specimen (2) in order to generate a torque for mechanically stabilizing the test specimen (2) when current is supplied to the said conductor loop by electromagnetic interaction with the inhomogeneous magnetic field,
- an electrically conductive suspension apparatus (3) for rotatably mounting the test specimen (2) and for supplying current to the conductor loop (6), which is connected in series with the said suspension apparatus, by means of electrical contact points (5a, 5b), wherein an electrical DC resistance between two points of the suspension apparatus (3) is determined using a measuring apparatus (12), and this DC resistance is evaluated for the purpose of determining the temperature of the suspension apparatus (3), of the contact points (5a, 5b) and/or of the conductor loop (6).

2. Method according to Claim 1, wherein the DC resistance is determined and is evaluated for the purpose of detecting instability of the electrical contact points (5a, 5b).

3. Method according to Claim 1, wherein the DC resistance is determined and is evaluated for the purpose of detecting the corrosion of the suspension apparatus (3), of the contact points (5a, 5b) and/or of the conductor loop (6).

## Revendications

1. Procédé de fonctionnement d'un dispositif de capteur (1) magnétomécanique destiné à l'analyse de gaz paramagnétique, comprenant
- une éprouvette (2) destinée à être suspendue en rotation dans un champ magnétique non homogène,
- une boucle conductrice (6) fixée sur l'éprouvette (2) pour, lors de son alimentation en courant par une interaction électromagnétique avec le champ magnétique non homogène, produire un couple destiné à la stabilisation mécanique de l'éprouvette (2),
- un dispositif de suspension (3) électriquement conducteur destiné à supporter en rotation l'éprouvette (2) et à l'alimentation en courant de la boucle conductrice (6), montée en série, par le biais d'emplacements de contact (5a, 5b) électriques, une résistance en courant continu électrique étant définie avec un dispositif de mesure (12) entre deux points du dispositif de suspension (3), et cette résistance en courant continu électrique étant analysée en vue de la définition de la température du dispositif de suspension (3), des emplacements de contact (5a, 5b) et/ou de la boucle conductrice (6).

2. Procédé selon la revendication 1, la résistance en courant continu étant définie et analysée pour la détection d'une instabilité des emplacements de contact (5a, 5b).

3. Procédé selon la revendication 1, la résistance en courant continu étant définie et analysée pour la détection de la corrosion du dispositif de suspension (3), des emplacements de contact (5a, 5b) et/ou de la boucle conductrice (6).
